# EUROPÄISCHE PATENTSCHRIFT

(11) **EP 2 033 057 B1**
(45) Veröffentlichungstag und Bekanntmachung des Hinweises auf die Patenterteilung: **03.08.2011**
(21) Anmeldenummer: 07785857.9
(22) Anmeldetag: 27.06.2007
(51) Int. Cl.: G05B 19/406, G05B 23/00, F02C 9/00, F01D 17/00, F04D 27/00, G01M 15/14, G06F 15/00, G05D 7/00

(54) **VORRICHTUNG UND VERFAHREN ZUM DURCHFÜHREN EINES STELLORGANFUNKTIONSTESTS AN EINER STRÖMUNGSMASCHINE**
DEVICE AND METHOD FOR PERFORMING A FUNCTIONAL TEST ON A CONTROL ELEMENT OF A TURBO ENGINE
DISPOSITIF ET PROCÉDÉ POUR RÉALISER UN ESSAI DE FONCTION D'ORGANE DE RÉGLAGE SUR UNE TURBOMACHINE

(30) Priorität: 28.06.2006 DE 102006030108
(43) Veröffentlichungstag der Anmeldung: 11.03.2009
(73) Patentinhaber: MAN Diesel & Turbo SE, 86153 Augsburg (DE)
(72) Erfinder: BLOTENBERG, Wilfried, 46535 Dinslaken (DE); GEBHARDT, Ulrich, 58332 Schwelm (DE)
(86) Internationale Anmeldenummer: PCT/EP2007/005683
(87) Internationale Veröffentlichungsnummer: WO 2008/000459

(56) Entgegenhaltungen:
- GB-A- 2 418 708
- JP-A- 10 008 914
- JP-A- 59 023 003
- JP-A- 60 088 803
- JP-A- 63 129 105
- US-A- 4 512 185
- US-A1- 2002 108 436

## Beschreibung

Die vorliegende Erfindung betrifft eine Vorrichtung und ein Verfahren zum Durchführen eines Funktionstests von Stellorganen an einer Strömungsmaschine und insbesondere eines Teilhubtests bzw. partial stroke test an Ventilen.

Aus der US 2006167810 A und der US 4,512,185 sind Testsysteme zum Testen eines von mehreren Stellventilen bekannt, durch die einer Turbine insgesamt ein Arbeitsmedium zugeführt wird. Wird das zu testende Stellventil geschlossen, wird der entsprechende Anteil an Arbeitsmedium über die verbleibenden Stellventile zugeführt, so dass keine Beeinflussung des Turbinenbetriebs auftritt.

Die GB 2 418 708 A lehrt, von N parallelen Stellventilen einer Turbine beim Test eines Ventils die übrigen N.1 Ventile entsprechend der Differenz zwischen einem bekannten Massenstrom bei N und bei N-1 Ventilen zu verändern, um eine Änderung des Massenstroms beim testen des einen Ventils zu vermeiden.

Bei vielen technischen Systemen befinden sich bestimmte Stellorgane bzw. Prozessstellelemente, wie z. B. Ventile für eine längere Betriebszeit in einer unveränderten Position. Dies ist insbesondere für die Prozessstellelemente der Fall, die nur in Notfall - oder Störfallsituationen zum Einsatz kommen sollen. Durch die seltene Betätigung des Prozessstellelements kann beispielsweise aufgrund von Ablagerungen, Verschleiß oder thermischen Verformungen ein teilweises oder vollständiges Blockieren auftreten. Handelt es sich bei dem Prozessstellelement um ein Ventil, das nur im Notfall geöffnet werden soll, bleibt ein schadhaftes, weil blockierendes Ventil, so lange unbemerkt, bis das Ventil im Notfall betätigt werden soll.

Ein Beispiel für ein derartiges Schutzsystem ist ein Pumpgrenzregelventil an Turbokompressoren. Das heißt, das Pumpgrenzregelventil schützt vor dem so genannten Pumpen. Pumpen tritt auf, wenn der Betriebspunkt des Turbokompressors durch Verringern der Fördermenge oder durch einen Anstieg des Enddruckes in den instabilen Bereich des Kennfeldes gerät. Beim Pumpen kommt es zum zyklischen Fördern und Rückströmen des komprimierten Gases. Dadurch entstehen hohe Vibrationen, Druckstöße und ein rascher Temperaturanstieg im Turbokompressor. Mögliche Folgen sind Lager-, Laufrad- oder Schaufelschäden und damit verbundene Betriebsausfälle. Das Pumpgrenzregelventil muss auf Grund seiner seltenen durch Notfälle bedingte Betätigung regelmäßig auf Funktionsfähigkeit überprüft werden.

Im Stand der Technik wird dieser Problemstellung bei Ventilen durch so genannte Teilhubtests begegnet. Bei diesen Teilhubtests wird das Ventil in regelmäßigen zeitlichen Abständen derart betätigt, dass es einen geringen Teil seines Hubweges durchfährt. Die Hubbewegung des Ventils wird überwacht und dadurch die Funktionalität geprüft.

Der Nachteil des aus dem Stand der Technik bekannten Teilhubtests ist darin zu sehen, dass die Betätigung des Ventils den Betrieb des der Turbomaschine nach gelagerten Gesamtprozesses beeinflusst. Aus diesem Grund wird nur ein geringer Hub durchfahren oder die Testdauer auf ein Minimum reduziert, um den Einfluss auf den Betrieb so gering wie möglich zu halten. Pumpgrenzregelventile sind üblicherweise für ca. 200 % des Kompressornennförderdurchfluss ausgelegt. Öffnet das Pumpgrenzregelventil nur um 5 %, gelangen 10 % weniger Förderdurchfluss zum Prozess. Dies stellt für viele Prozesse eine unakzeptable Betriebsstörung dar. Andererseits gibt ein Test von weniger als 5 % des Ventilhubs in vielen Anwendungsfällen keine ausreichende Sicherheit, dass das Ventil im Anforderungsfall auch über einem weiteren Hubbereich sicher arbeitet.

Durch den Teilhubtest ist nicht auszuschließen, dass ein Ventil, das den Teilhub regelmäßig problemlos durchfahren hat, beim Verlassen dieses Teilhubs dennoch blockiert. Bei Tests mit minimaler Testdauer und somit schlagartiger Verstellung des Ventils kann z.B. eine beginnende Blockade, die sich in einer ungleichförmigen Bewegung des Ventils bei langsamer Verstellung des Ventils äußert, nicht festgestellt werden.

Aufgabe der Erfindung ist es demnach eine Vorrichtung und ein Verfahren bereitzustellen, das es erlaubt, zuverlässigere Tests an Prozessstellelementen von Strömungsmaschinen durchzuführen, ohne den der Strömungsmaschine nach gelagerten Prozess wesentlich zu beeinflussen.

Diese Aufgabe wird durch die Gegenstände der unabhängigen Ansprüche gelöst. Strömungsmaschinen sind häufig mit mehr als einem Prozessstellelement ausgerüstet, die jeweils beispielsweise kumulativ, d.h. in der Summe, oder alternativ, d.h. unabhängig voneinander, die gleiche Prozessgröße beeinflussen. Bei einem Turbokompressor wird mit einem ersten Prozessstellelement, wie z.B. verstellbare Leitschaufeln die Förderkapazität des Kompressors variiert. Das Pumpgrenzregelventil als Teil des Maschinenschutzsystems hat die Aufgabe, bei einer Verringerung des Kompressordurchflusses unter die Stabilitätsgrenze (Pumpgrenze) durch geregeltes Öffnen des Pumpgrenzregelventils den Durchsatz durch den Kompressor derart groß zu halten, dass die Stabilitätsgrenze nicht unterschritten wird. Im Umkehrschluss bedeutet das, dass ein Öffnen des Pumpgrenzregelventils bei stationärem Kompressorbetrieb dazu führt, dass weniger Durchfluss in den Prozess fließt. Die verstellbaren Leitschaufeln und das Pumpgrenzregelventil wirken insofern alternativ, da durch jedes Stellglied dem Prozess der Durchsatz deutlich verändert werden kann. Bei einer Dampf- oder Gasentspannungsturbine werden häufig mehrere Ventile parallel installiert, die zur feinfühligen Drehzahlverstellung gestaffelt verfahren werden. Diese Stellorgane wirken insofern kumulativ, da sie zusammen den Gesamtvolumenstrom zur Turbine definieren. Beim Betrieb mehrerer Strömungsmaschinen im Reihen- oder Parallelbetrieb besitzt jede Strömungsmaschine wenigstens ein eigenes Stellorgan zur Kapazitätsanpassung. Der gemeinsame Saugdruck und Enddruck von Kompressoren im Parallelbetrieb kann durch jedes Stellorgan zur Kapazitätsanpassung eines jeden Kompressors kumulativ beeinflusst werden. Gleiches gilt für den Durchfluss von Kompressoren im Reihenbetrieb, bei dem die Stellorgane der einzelnen Strömungsmaschinen alternativ wirken, d.h. jeweils den Gesamtdurchsatz variieren können.

Erfindungsgemäß wird die Tatsache, das die gleiche Prozessgröße durch mehr als ein Prozessstellelement beeinflusst werden kann, dazu genutzt, einen Funktionstest von Stellelementen durchzuführen, ohne dass die Prozessgröße selbst einer Änderung unterworfen wird.

Für einen Test des ersten Prozessstellelementes ändert das erfindungsgemäße Testsystem über das zweite Prozessstellelement die Prozessgröße. Dies geschieht abhängig von der Ruheposition des ersten Prozessstellelements. Das heißt, ist beispielsweise das erste Prozessstellelement ein Ventil, das im störungsfreien Betrieb geschlossen oder teilweise geöffnet ist und den durch einen Turbokompressor fließenden Durchfluss beim Öffnen verringert, so wird durch das zweite Prozessstellelement, wie z. B. verstellbare Leitschaufeln, der durch den Turbokompressor erzeugte Durchfluss erhöht. Die Änderung der Prozessgröße wird durch das erste Prozessstellelement kompensiert. D. h. bei dem gewählten Beispiel wird zur Kompensation der Durchflussänderung das Ventil als erstes Prozessstellelement geöffnet, wodurch der von der Turbomaschine erzeugte erhöhte Durchfluss wieder verringert wird.

Über die erfindungsgemäße Vorrichtung erfolgt durch das Betätigen der beweglichen Teile des Prozessstellelements während des Testlaufs eine Reinigung insbesondere der Stellen des Prozessstellelements, die nur ein geringes Spiel aufweisen. Selbst wenn über den Testlauf lediglich ein Teil des Gesamthubes durchfahren wird, so können doch über den Teilhubtest wesentlich längere Wege durchfahren werden, als dies im Stand der Technik ohne Kompensation der Testauswirkungen bisher möglich ist. Erfindungsgemäß ist ebenso ein Verfahren zum Testen der Funktionalität eines Prozessstellelementes einer Strömungsmaschine vorgesehen.

Die vorliegende Erfindung wird nachfolgend im Rahmen konkreter Ausführungsformen der Erfindung anhand einiger Figuren näher erläutert. Es zeigt:
- Fig. 1: ein Übersichtsdiagramm einer Hochofenanlage mit Turbokompressor;
- Fig. 2: ein Blockdiagramm einer ersten Ausführungsform eines Teilhubtestsystems für Pumpgrenzregelventile;
- Fig. 3: ein Blockdiagramm einer zweiten Ausführungsform eines Teilhubtestsys- tems für Pumpgrenzregelventile;
- Fig. 4: ein Blockdiagramm einer dritten Ausführungsform eines Teilhubtestsystems für Pumpgrenzregelventile;
- Fig. 5: ein Blockdiagramm einer vierten Ausführungsform eines Teilhubtestsystems für Pumpgrenzregelventile; und
- Fig. 6: ein Blockdiagramm einer fünften Ausführungsform eines Teilhubtestsystems für Pumpgrenzregelventile.

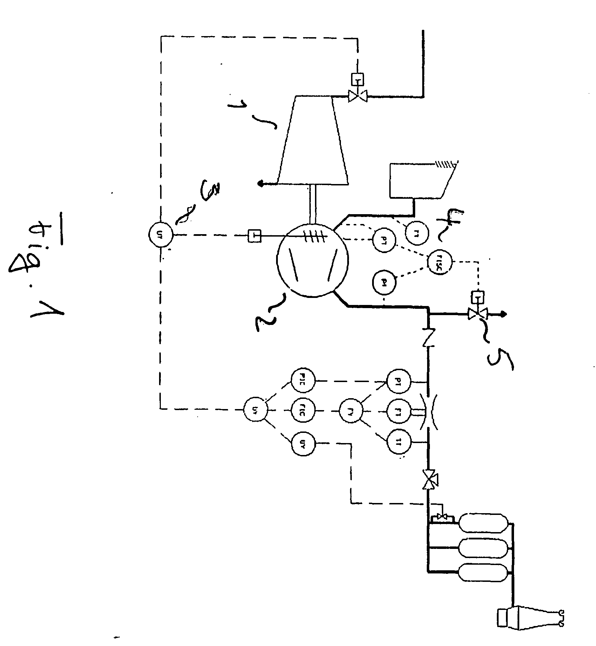

Fig. 1 zeigt eine Anwendung des Turbokompressors 2 in einer Hochofenwindversorgung. Dem Turbokompressor 2 nach geschaltet ist ein Pumpgrenzregelventil 5. Das Pumpgrenzregelventil 5 hat die Aufgabe, Kompressoren vor dem Betrieb im instabilen Arbeitsbereich durch geregeltes Öffnen zu schützen.

Wie in Fig. 1 dargestellt, ist das Pumpgrenzregelventil 5 ein auf der Druckseite des Turbokompressors 2 angeordnetes Ventil. Das Öffnen des Pumpgrenzregelventils 5 bewirkt eine Erhöhung des Kompressordurchflusses und damit einen Betrieb außerhalb des Pumpbereichs. Die durch das Pumpgrenzregelventil 5 abströmende Gasmenge bedeutet immer eine Wirkungsgradeinbuße. Deshalb werden Anlagen in der Regel so ausgelegt, dass Pumpgrenzregelventile im störungsfreien Betrieb des Kompressors völlig geschlossen sind und nur bei Betriebsstörungen bzw. zum An- und Abfahren geöffnet werden.

Eine Funktionsprüfung des Pumpgrenzregelventils 5 des Turbokompressors im Betrieb bedeutet daher eine Beeinträchtigung des Betriebsverhaltens der Gesamtanlage. Denn durch das Öffnen des Pumpgrenzregelventils 5 reduziert sich der Durchfluss zum Prozess und in dessen Folge auch der Druck im Prozess, der dem Kompressor nachgeschaltet ist. Dies gilt auch für eine nur kurzzeitige Öffnung und/oder einem Teilhub.

Der Turbokompressor 2 wird über eine Dampfturbine 1 angetrieben. Die Förderleistung des Kompressors wird über eine Variation der Turbinendrehzahl oder eine Verstellung der Leitschaufeln des Turbokompressors angepasst. Die Pumpgrenzregelung 4 ist aus dem Stand der Technik bekannt und verhindert, dass der Kompressor durch das Auftreten von Pumpen Schaden nimmt.

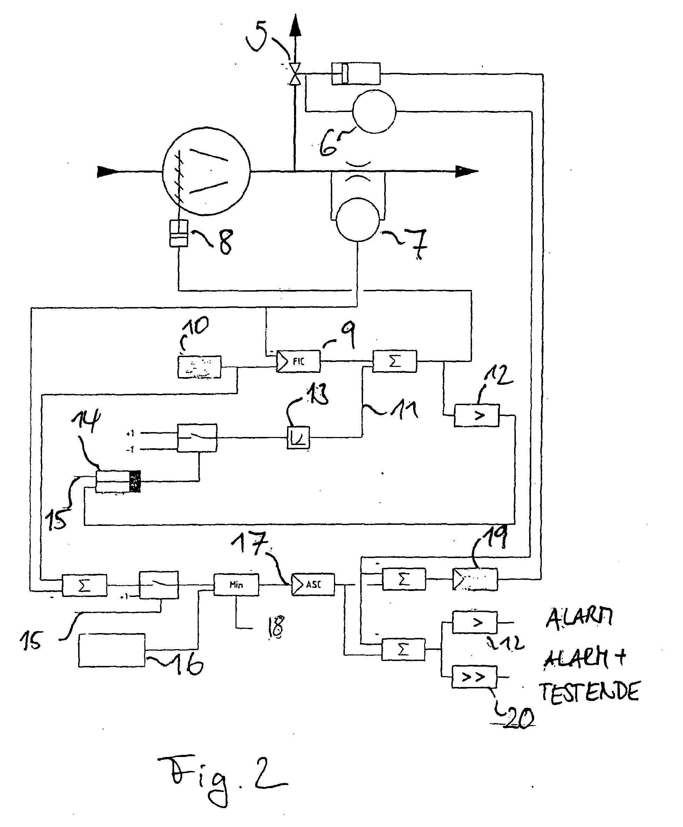

Fig. 2 zeigt eine Vorrichtung zur Durchführung eines Teilhubtests an einem Pumpgrenzregelventil 5 eines Turbokompressors 2. Das Teilhubtestsystem gemäß der vorliegenden Erfindung testet das Pumpgrenzregelventil 5 derart, dass es dieses zum Test des Pumpgrenzregelventils öffnet und die sich dadurch einstellende geringere Förderkapazität des Kompressors durch Öffnen der Leitschaufeln 8 in Richtung höherer Kompressorleistung kompensiert. Unabhängig von dieser konkreten Ausgestaltung kann ein Prozessstellelement jeder Aktuator zum Ändern einer Prozessgröße sein, z. B. eine Vorrichtung zum Ändern der Drehzahl, eine Drosselklappe o. ä.. Zur Kompensation des Kompressorförderleistungsverlusts infolge des Öffnens des Pumpgrenzregelventils kann irgendein Prozessstellelement verwendet werden, das in der Lage ist, diesen Verlust auszugleichen. In der beschriebenen Anwendung ist die zu regelnde Prozessgröße der Durchfluss, der an einer geeigneten Stelle gemessen wird und zu dessen Einstellung die Leitschaufeln automatisch verstellt werden.

Der durch den Kompressor geförderte Durchfluss wird über einen Durchflussregler 9 auf den von einem Sollwertgeber für den Durchfluss 10 vorgegebenen Wert eingestellt. Der zur Regelung des Durchflusses vorgesehene Aktuator ist vorzugsweise der Leitschaufelstellantrieb, kann aber auch eine Vorrichtung zur Änderung der Drehzahl oder eine Kombination aus beidem sein. Das Pumpgrenzregelventil 5 ist bis zu diesem Zeitpunkt noch geschlossen oder im Teillastbetrieb um einen festen Betrag geöffnet.

Zum Stellorganfunktionstest behält der Durchflussregler 9 intern seine letzte Ausgangsgröße bei. Ein mittels Integrator über der Zeit veränderbares Testsignal 15 wird erzeugt. Die Differenz aus Durchflusssollwert vom Sollwertgeber für den Durchfluss 10 und dem Durchflussistwert von der Durchflussmessvorrichtung 7 wird dem Pumpgrenzregler 16, 17, 18 mit dem nachgeschalteten Stellungsregler für das Pumpgrenzregelventil 19 aufgeschaltet, dem nun die Aufgabe zukommt, den Durchfluss auf den Durchflusssollwert einzuregeln. Der Ausgang des Durchflussreglers 9 wird durch additive Überlagerung des langsam kontinuierlich ansteigenden Testsignals 15 in Richtung weiter geöffneter Leitschaufeln und/oder höherer Drehzahl gefahren. Durch diese Steigerung der Kompressorförderleistung steigt der Durchfluss zum Prozess.

Der Durchfluss-Soll/Ist-Vergleich im Pumpgrenzregler 17 bemerkt diese Zunahme und regelt sie durch Öffnen des Pumpgrenzregelventils über den Positionsregler 19 aus.

Durch einen Vergleich von Sollwert und Istwert der Stellung des Pumpgrenzregelventils 5 kann beobachtet werden, ob das Ventil der Sollwertvorgabe hinreichend genau folgt. Der Ausgang der Summierstelle hinter dem Durchflussreglers 9 steigt so lange kontinuierlich an, bis sein Ausgang einen oberen Grenzwert erreicht hat. Das Signal wird dann kurz gehalten. Der Pumpgrenzregler 17 bekommt so Gelegenheit, die stationäre Endlage exakt zu erreichen. Danach wird das Testsignal 15 wieder langsam bis auf null reduziert. Wenn das Testsignal 15 den Wert null erreicht hat oder das Pumpgrenzregelventil völlig geschlossen ist, wird der Durchflussregler wieder auf Automatikbetrieb geschaltet und übernimmt die weitere Regelung des Anlagenbetriebs.

Sollte der Kompressor mit mehreren Pumpgrenzregelventilen ausgestattet sein, kann dieser Test entweder derart erfolgen, dass alle Ventile gleichsinnig, d.h. parallel angesteuert werden. Vorzugsweise wird der Test aber derart ausgeführt, dass jedes Ventil für sich getestet wird. Dies bedeutet, dass nach Abschluss des Tests für das erste Ventil ein gleichsinniger Test für das zweite und jedes weitere Ventil erfolgen muss.

Die Funktion des Pumpgrenzregelventils 5 wird durch Vergleich der Iststellung mit der Sollstellung überprüft. Bei einem intakten Ventil weicht die gemessene Stellung nicht mehr als eine systemspezifische Ansprechschwelle vom Sollwert ab. Dies kann z.B. in einem Vergleicher (Grenzwertüberwachung) kontinuierlich überwacht werden. Überschreitet die Differenz einen ersten Grenzwert 12, wird ein Alarm gegeben. Erreicht die Differenz einen zweiten Grenzwert 20, der z.B. doppelt so hoch sein kann wie die erste Ansprechschwelle, erfolgt ein zweiter Alarm, der den Test sofort beendet und das Bedienungspersonal zur sofortigen Inspektion des Ventils auffordert.

Der Zusammenhang zwischen Stellungssollwert für ein oder mehrere Pumpgrenzregelventile und gemessener Stellungsrückmeldung kann mit modernen Leitsystemen digital aufgezeichnet und als Liniendiagramm oder x/y-Diagramm mit Sollwert als Ordinate und Ventilstellung als Abszisse dargestellt werden.

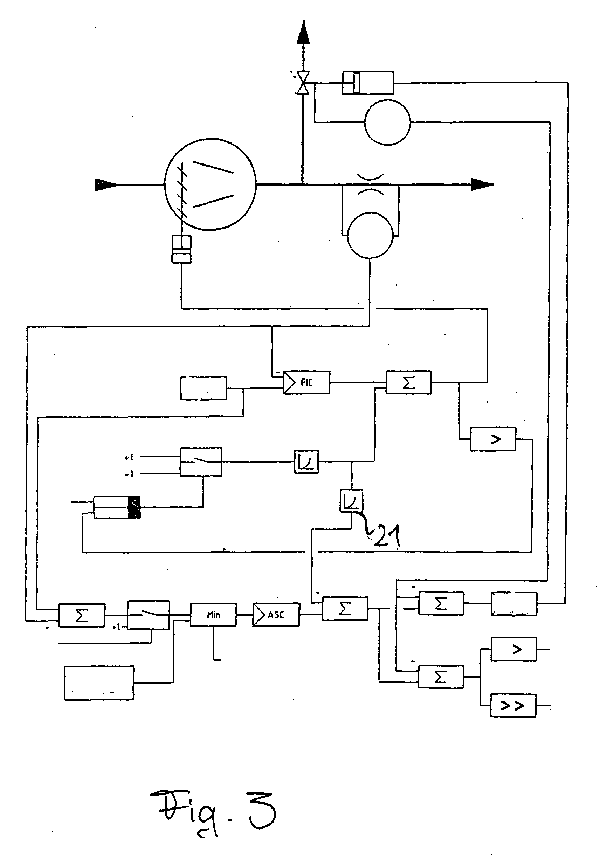

Gemäß einer zweiten vorteilhaften Ausführungsform, wie sie in Fig. 3 dargestellt ist, sieht die vorliegende Erfindung eine Vorrichtung zur Vermeidung von Prozessstörungen durch adaptive Verstellung des Pumpgrenzregelventils vor. Fig. 3 entspricht weitgehend Fig. 2 und ist lediglich durch einen Summierer erweitert, der mit einem Funktionsgeber 21 verbunden ist.

Die erste Ausführungsform gemäß Fig. 2 sollte ein langsam ansteigendes Testsignal verwenden, damit der Pumpgrenzregler 17 die Durchflusszunahme als Folge der Verstellung von Drehzahl und/oder Leitschaufelstellung durch Öffnen des Pumpgrenzregelventils 5 ausregeln kann. Eine Verbesserung dieser Ausführungsform ist gemäß Fig. 3 dadurch möglich, dass das Testsignal 15 zusätzlich dem Ausgang des Pumpgrenzreglers vorzeichengerecht aufgeschaltet wird. Hierdurch öffnet das Pumpgrenzregelventil 5 schon, bevor der Durchfluss tatsächlich angestiegen ist. Diese Vorsteuerung, in der dem Pumpgrenzregler unabhängig von der Regeldifferenz aus dem Summierer zusätzlich eine sich ändernde Führungsgröße aufgeschaltet wird, verbessert das Ansprechverhalten.

Der Zusammenhang zwischen Drehzahl bzw. Leitschaufelstellung und Durchfluss durch den Kompressor ist in der Regel nichtlinear, wogegen der Zusammenhang zwischen der Stellung des Pumpgrenzregelventils und dem Durchfluss durch das Ventil linear ist. Durch eine geeignet gewählte nichtlineare Funktion, die am Funktionsgeber 21 einstellbar ist, kann sichergestellt werden, dass das Pumpgrenzregelventil 5 in Abhängigkeit vom Testsignal 5 genau so weit geöffnet wird, dass sich die Zunahme des Kompressordurchflusses durch Anheben von Drehzahl und/oder Öffnen der Leitschaufeln exakt mit der Abnahme des Durchflusses durch Öffnung des Pumpgrenzregelventils 5 überein stimmt. Somit muss der Pumpgrenzregler 17 nicht eingreifen und der Teilhubtest verläuft ohne nachteilige Beeinflussung des Prozesses. In den Fällen, in denen der Zusammenhang zwischen der Stellung des Pumpgrenzregelventils und dem Durchfluss durch dieses Ventil nichtlinear ist, kann dies durch geeignete Wahl der nichtlinearen Funktion ebenfalls korrigiert werden.

Sollte die Kompensation der beiden Stellgrößeneirigriffe beispielsweise infolge nicht korrekt eingestellten Funktionsgebers 21 oder aufgrund eines Kalibierfehlers nicht völlig gelingen, bewirkt der Pumpgrenzregler eine Korrektur des verbleibenden Restfehlers.

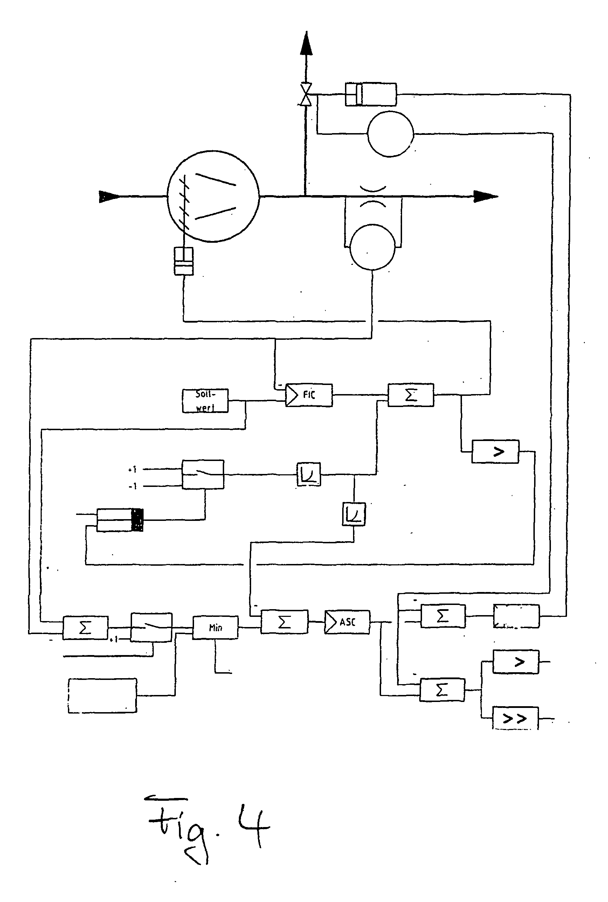

Gemäß einer dritten Ausführungsform der Erfindung, die in Fig. 4 gezeigt ist, wird, anstatt das Testsignal 15 auf den Ausgang des Pumpgrenzreglers 17 zu addieren, das Testsignal 15 auf die Regeldifferenz am Eingang des Pumpgrenzreglers 17 vorzeichengerecht addiert. Das hat den Vorteil, dass das Ausgangssignal des Pumpgrenzreglers 17 stets mit dem Sollwert für das Pumpgrenzregelventil 5 übereinstimmt. Der Pumpgrenzregler 17 ist sozusagen immer im Eingriff.

Ferner lassen sich die Einstelldaten für den Funktionsgeber aus den Auslegungsdaten für Kompressor 2 und Pumpgrenzregelventil 5 ermitteln. Insbesondere kann die exakte Zuordnung der Größen beim ersten Test experimentell ermittelt und das System anschließend auf diese Werte eingestellt werden.

In einer weiteren vorteilhaften Ausgestaltung dieser Erfindung wird die Differenz aus dem Testsignal und dem Ausgangssignal des Pumpgrenzreglers zu Beginn des Tests gebildet und als virtuelle Regeldifferenz der Minimalauswahl MIN vor dem Pumpgrenzregler aufgeschaltet. Mit steigendem Testsignal erhält der Pumpgrenzregler eine Regeldifferenz, die das Pumpgrenzregelventil genau so weit öffnet, wie es das Testsignal verlangt. Falls das Pumpgrenzregelventil vor Beginn des Tests bereits teilweise geöffnet war, wird dies dadurch kompensiert, dass die Stellung des Pumpgrenzregelventils zu Beginn des Tests als Referenzwert zugrunde gelegt wird. Sollte sich der Arbeitspunkt des Kompressors während des Tests derart in Richtung Pumpgrenze verschieben, dass das Pumpgrenzregelventil weiter öffnen muss als vom Testsignal vorgegeben, erfolgt ein automatischer Eingriff des Pumpgrenzreglers durch die Minimalauswahl.

In all den Anwendungen, in denen der nichtlineare Zusammenhang zwischen Testsignal und Durchfluss zum Prozess eine Abhängigkeit von einem weiteren Parameter, z.B. dem Kompressorenddruck aufweist, kann die Kompensation dieses Einflusses durch ein Kennlinienfeld kompensiert werden. Das Kennlinienfeld enthält eine Reihe von nichtlinearen Kompensationskurven für verschiedene Drücke und je nach gemessenem Enddruck wird die entsprechende Kurve ausgewählt. Sollte der gemessene Druck zwischen zwei Kennlinien liegen, wird zwischen diesen Kennlinien interpoliert.

Bei einer korrekt eingestellten adaptiven Verstellung des Pumpgrenzregelventils kann das Testsignal beliebig schnell verstellt werden, da die Störungen des Prozessbetriebs durch die Entkopplung vermieden werden. Allerdings ist zu beachten, dass die Stellgeschwindigkeit der Prozessstellelemente möglicherweise begrenzt ist. Hierauf ist Rücksicht zu nehmen, die Stellgrößen dürfen nicht schneller verstellt werden als die Prozessstellelemente folgen können.

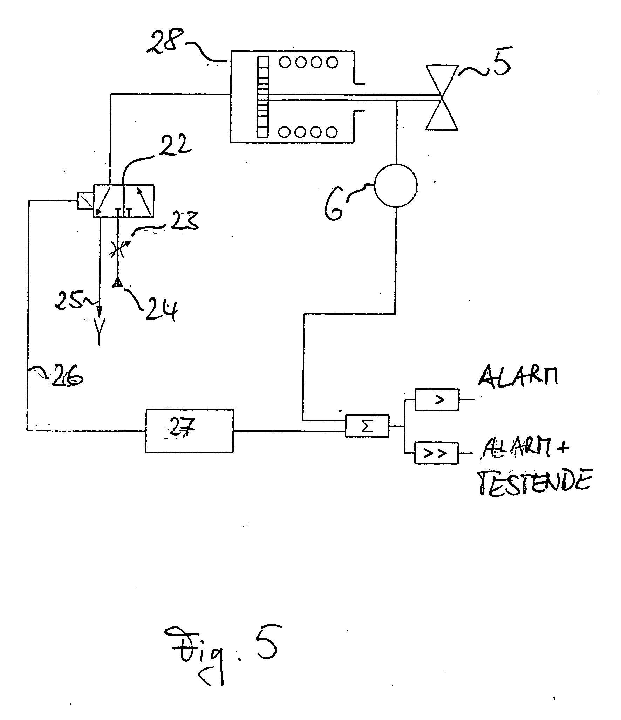

Gemäß einer vierten Ausführungsform der Erfindung, wie sie in Fig. 5 dargestellt ist, ist ein Beobachter 27 vorgesehen, der die Nachteile langsamer Prozessstellelemente kompensiert. Die Prozessstellelemente haben teils konstruktionsbedingt, teils bewusst implementiert, begrenzte Stellgeschwindigkeiten. Pneumatische Regelarmaturen können häufig nicht mehr als 10% des Gesamthubs pro Sekunde zurücklegen. Pumpgrenzregelventile und Leitschaufelstellantriebe werden bewusst in ihrer Schließgeschwindigkeit begrenzt, um eine unzulässig schnelle Annäherung des Arbeitspunkts an die Pumpgrenze zu verhindern. Dies ist bei der Durchführung des Teilhubtests zu berücksichtigen, da ansonsten ein Alarm fehlerhaft ausgelöst werden kann.

Bei Einsatz eines Beobachters 27 wird die gemessene Position des Pumpgrenzregelventils nicht direkt mit dem Sollwert für die Position verglichen, sondern mit der Ausgangsgröße eines Beobachters. Durch eine Drossel 23 im Zulauf 24 eines elektrohydraulischen Wandlers 22 kann ein durch Federkraft öffnendes Pumpgrenzregelventil nur mit begrenzter Stellgeschwindigkeit schließen. Je enger der Querschnitt der Drossel 23 ist, um so langsamer schließt das Ventil.

Der Beobachter 27 ist ein dynamisches Simulationsmodell dieses Pumpgrenzregelventils mit Stellantrieb 28. Ein derartiger Beobachter ist z.B. in "Ein Beitrag zur digitalen Pumpschutzregelung von Turbokompressoren" Schriftenreihe des Lehrstuhls für Regelungssysteme und Steuerungstechnik Ruhr Universität Bochum, Heft 31 beschrieben.

Das Ausgangssignal des Beobachters 27 entspricht stets der Stellung des Pumpgrenzregelventils 5, sofern dieses in seiner Funktion nicht beeinträchtigt ist. Solange der Beobachter das tatsächliche Stellverhalten des Ventils richtig simuliert und das Ventil einwandfrei arbeitet, entspricht der Ausgang des Beobachters auch bei sprungförmiger Änderung des Ventilsollwerts und sehr stark gedrosseltem Ölzulauf immer der tatsächlichen Ventilstellung.

Der Teilhubtest kann entweder von Hand, teilautomatisiert oder vollautomatisiert durchgeführt werden. Bei der Durchführung von Hand wird das Testsignal durch einen Operator von Hand vorgegeben. Die Beobachtung der Ventilrückmeldung erfolgt ebenfalls durch den Operator. Bei einer Vollautomatisierung wird in regelmäßigen zeitlichen Abständen der Test angestoßen und läuft danach vollautomatisch ab. Nach Abschluss des letzten Testlaufs für das letzte Ventil wird die Testautomatik in einen Ausgangszustand zurückgesetzt und steht damit für den nächsten Testlauf zur Verfügung. Auch die Archivierung der Testergebnisse erfolgt vollautomatisch.

Gemäß einer weiteren Ausgestaltung der Erfindung kann bei einer nicht korrekten Kompensation der Einwirkung des Testsignals auf die Prozessgröße, der Einfluss des Testsignals reduzieren werden, indem die Geschwindigkeit, mit der die Testgröße verändert wird, in Abhängigkeit von der Differenz aus Sollwert und Istwert der Prozessgröße variiert wird. Ist die Abweichung null, wird der Test mit maximal zulässiger bzw. maximal möglicher Geschwindigkeit durchfahren. Je größer die Abweichung zwischen Sollwert und Istwert der Prozessgröße ist, um so langsamer wird die Prozessgröße verändert. Im Extremfall ist es sogar möglich, das Testsignal gar nicht mehr zu verstellen oder sogar in die entgegen gesetzte Richtung zu verstellen, bis die Differenz aus Sollwert und Istwert der Prozessgröße wieder akzeptabel ist.

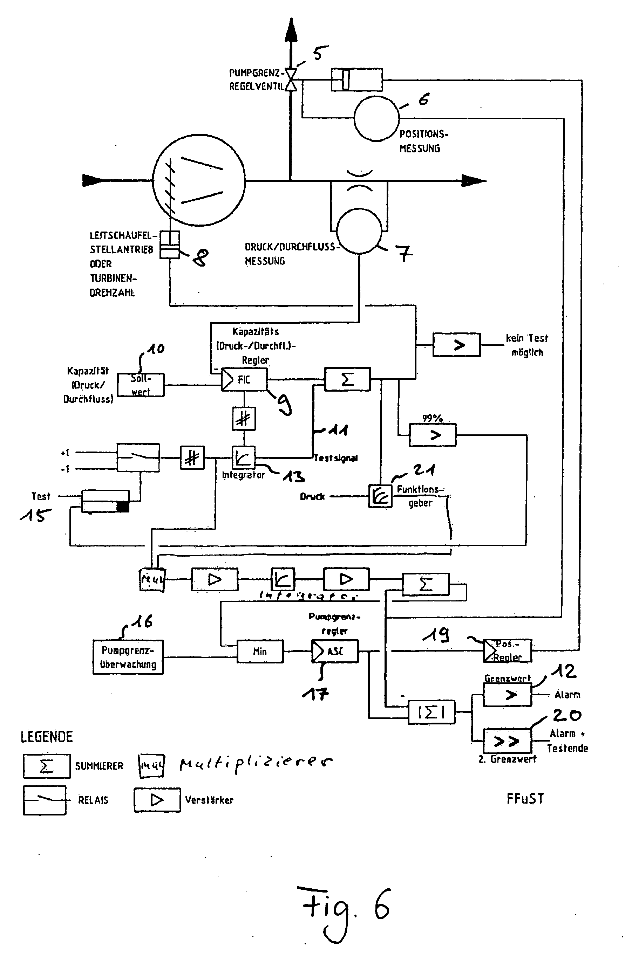

Fig. 6 zeigt ein Blockdiagramm einer fünften Ausführungsform eines Teilhubtestsystems für Pumpgrenzregelventile nach der vorliegenden Erfindung. Mit den vorstehend beschriebenen Ausführungsformen übereinstimmende Elemente weisen einander entsprechende Bezugszeichen auf.

Das Teilhubtestsystem nach der fünften Ausführungsform umfasst eine Pumpgrenzüberwachung 16, deren Ausgabe über eine Minimalauswahl 18 einem Pumpgrenzregler 17 zugeführt wird. Hierdurch kann auch während des Testbetriebs ein Pumpen des Kompressors 2 verhindert werden, da eine entsprechende Stellgröße für das Pumpgrenzregelventil 5, die die Pumpgrenzüberwachung 16 zur Vermeidung von Pumpen vorgibt, im Bedarfsfall auf den Positionsregler 19 durchgeschaltet wird, der das Pumpgrenzregelventil 5 entsprechend aktuiert.

Die von der Positionsmessung 6 erfasste Position des Pumpgrenzregelventils 5 wird rückgeführt und in einem Summierer von der vom Pumpgrenzregler 17 vorgegebenen Sollposition subtrahiert. Überschreitet die Differenz zwischen Positionssoll- und -istwert betragsmäßige einen ersten oder zweiten Grenzwert 12 bzw. 20, wird ein Alarm ausgelöst und - bei Überschreiten des zweiten Grenzwertes - der Test kontrolliert beendet. Durch diese Positionsüberwachung kann auch eine beginnende Schwergängigkeit des Pumpgrenzregelventils 5, die sich in einer zunehmenden Hysterese bei dessen Öffnen und Schließen zeigt, rechtzeitig erkannt werden.

Vor Testbeginn wird zunächst überprüft, ob ausreichend Kapazitätsreserven zur Verfügung stehen. Nur in diesem Fall wird der Test durchgeführt. Hierzu wird geprüft, ob der Leitschaufelstellantrieb 8 nur bis zu einem bestimmten Grenzwert, der beispielsweise 95% der maximal möglichen Leitschaufelöffnung entspricht, aktuiert ist. Bevorzugt wird auch während des Tests auf diese Weise fortwährend überprüft, ob noch genügend Kapazität zur Kompensation der Abströmung durch das zu Testzwecken geöffneten Pumpgrenzregelventil 5 zur Verfügung steht, d.h. die Leitschaufeln noch nicht auf 95% oder mehr ihrer maximalen Durchströmfläche gestellt sind. Sobald die Leitschaufeln sich stärker öffnen und somit die Gefahr besteht, dass eine noch stärkere Abströmung durch das Pumpgrenzregelventil 5 nicht mehr kompensiert werden kann, sondern den Prozess stört, wird der Test kontrolliert beendet.

Bei Testbeginn wird durch den Integrator 13 ein Testsignal 11 generiert, welches zunächst über der Zeit zunimmt, solange dem Integrator 13 aus dem Speicher 14 ein positiver, vorzugsweise konstanter Integrand zugeführt wird. Um den Test zu beenden, wird dem Integrator 13 anschließend ein entsprechend negativer Integrand zugeführt, der ein über der Zeit abnehmendes Testsignal 11 liefert. Dieses Testsignal 11 wird in einem Summierer dem Ausgang des Durchtlussreglers 9 aufgeschaltet und führt dazu, dass der Leitschaufelstellantrieb 8 eine Stellgröße erhält, die bei zunehmendem Testsignal 11 zu einer stärkeren Leitschaufelöffnung, d.h. einem größeren Durchfluss, und bei abnehmendem Testsignal 11 zu einer geringeren Leitschaufelöffnung, d.h. einem geringeren Durchfluss führt.

Auf diese Weise können die Leitschaufeln kontrolliert zunächst stärker geöffnet werden, als es zur Einstellung des Durchflusssollwertes erforderlich wäre, und anschließend wieder in eine Stellung zurückgeführt werden, in der sich gerade wieder der Durchflusssollwert einstellt. Dies kann beispielsweise einfach dadurch realisiert werden, dass dem Integrator 13 während der ersten Hälfte des Testbetriebs ein konstanter positiver Integrad und während der zweiten Hälfte ein betragsmäßig gleicher negativer Integrand zugeführt wird. Auch zum kontrollierten Beenden des Testes kann einfach dem Integrator 13 für die seit Testbeginn verstrichene Zeitdauer ein betragsmäßig gleicher negativer Integrand zugeführt werden. In einer bevorzugten Abwandlung kann der Integrand betragsmäßig auch reziprok zur Abweichung zwischen Soll- und Istwert des Durchflussreglers sein, so dass das Testsignal 11 sich bei größeren Soll-Ist-Differenzen langsamer ändert und dem Durchflussregler Gelegenheit zum Ausregeln der Störung gibt.

Je nach Lage des Arbeitspunktes des Kompressors 2 in seinem Kennfeld erfordert die Kompensation einer bestimmten Leitschaufelöffnung aufgrund der Nichtlinearitäten im Prozess unterschiedliche Pumpgrenzventilöffnungen. Hierzu ist im Testsystem nach der fünften Ausführungsform der vorliegenden Erfindung eine Kompensationsfunktion vorgesehen, die rechnerisch oder experimentell bestimmt werden kann. Zu diesem Zweck kann beispielsweise das Kompressorkennfeld Enddruck-Volumenstrom in Bereiche unterteilt werden, die sich jeweils zwischen zwei unterschiedlichen Drücken (z.B. zwischen 2 bar und 3 bar, zwischen 3 bar und 4 bar usw.) und zwei unterschiedlichen Leitschaufelstellungen (z.B. zwischen 10% geöffnet und 20% geöffnet, zwischen 10% geöffnet und 20% geöffnet etc.) erstrecken. Für jeden dieser die Bereiche definierenden Drücke kann dann ermittelt werden, wie sich der Durchfluss bei einer Änderung der Leitschaufelstellung von der einen in die andere der beiden den Bereich definierenden Leitschaufelstellungen ändert, wie stark sich also beispielsweise der Durchfluss bei einer Öffnung der Leitschaufeln von 10% auf 20% bei 2 bar vergrößert. Aus der Auslegungskurve des Pumpgrenzregelventils 5 kann dann eine Ventilverstellung ermittelt und den jeweiligen Kennwertpaaren (Druck; Leitschaufelstellungsänderung) zugeordnet werden, die die Durchflussänderung gerade kompensiert.

Im Funktionsgeber 21 wird nun dem vom Kompressor 2 tatsächlich erzeugten Druck p, beispielsweise 2 bar, und dem der Leitschaufelstellantrieb 8 aufgegebenen Stellgröße, beispielsweise einer Änderung von 10% auf 20% geöffnet, die entsprechende Positionsänderung des Pumpgrenzregelventils anhand dieser Kompensationsfunktion zugeordnet, d.h. diejenige Ventilverstellung, die die Durchflussänderung aufgrund der gerade ausgeführten Leitschaufelverstellung gerade kompensiert.

Diese Ventilverstellung wird dann zur Ist-Stellung des Pumpgrenzregelventils 5 hinzuaddiert und so dem Pumpgrenzregler 17 als neuer Sollwert zugeführt. Sofern die oben erläuterte Minimalauswahl nicht die Ausgabe der vorrangigen Pumpgrenzüberwachung 16 durchschaltet, um ein Pumpen des Kompressors 2 zu verhindern, ändert der Pumpgrenzregler 17 über den Positionsregler 19 die Stellung des Pumpgrenzregelventils 5 in der Folge so, dass bei dem tatsächlich herrschenden Druck gerade die durchgeführte Leitschaufelverstellung kompensiert wird. Durch die Aufaddition der sich aus der Kompensationsfunktion ergebenden Ventilverstellung zur Ist-Position kann einerseits den Nichtlinearitäten des Prozesses Rechnung getragen und andererseits der Test auch bei anfänglich nicht vollständig geschlossenem Pumpgrenzregelventil eingeleitet werden.

An Stelle des Enddruckes nach dem Kompressor kann der Kompensationsfunktion gleichermaßen auch dessen Druckverhältnis oder Enthalpiedifferenz zugrundegelegt werden.

In den vorstehenden beschriebenen Ausführungsformen weist die zu testenden Anlage bereits eine Kapazitätsregelung auf, in der der Durchfluss mittels Durchflussmessvorrichtung 7 erfasst, dem Durchflussregler 9 zugeführt und durch diesen einem von dem Sollwertgeber 10 vorgegebenen Solldurchfluss nachgeführt wird. In Anlagen, in denen keine solche Kapazitätsregelung vorhanden ist, kann vorteilhafterweise mittels eines Hilfs-Kapazitätsreglers, der nur während des Tests arbeitet, eine Störung des Prozessbetriebs, beispielsweise bei unvollkommener Kompensationsfunktion, ausgeregelt oder jedenfalls reduziert werden.

Hierzu wird in einer weiteren Ausführung der vorliegenden Erfindung zu Beginn eines Tests der Druckistwert nach dem Kompressor 2 erfasst und gespeichert. Dieser Druckwert wird nun während des Tests einem Hilfs-Kapazitäts- oder Durchflussregler, der beispielsweise als Proportional-Integral (PI) Regler ausgebildet sein kann, als Drucksollwert zugeführt. Der Hilfs-Kapazitätsregler bildet aus der Differenz zwischen dem Soll- und dem aktuell vorliegenden Druckistwert eine Stellgröße für das zweite Prozessstellelement, beispielsweise den Leitschaufelstellantrieb oder die Drehzahlsteuerung. Diese Stellgröße wird zu der Stellgröße hinzuaddiert, die zu Testzwecken auf das zweite Prozessstellelement aufgeschaltet wird, also beispielsweise ein trapezförmiges Öffnen und Schließen der Leitschaufeln bewirkt.

Damit wird während des Tests zum Einen das zweite Prozessstellelement bewusst verstellt, um eine Verstellung des ersten Prozessstellelementes, etwa des Pumpgrenzregelventils, zu Testzwecken zu kompensieren. Zum anderen wird sichergestellt, dass im Prozess weiterhin, jedenfalls im Wesentlichen, die Prozessgröße vorliegt, also beispielsweise der Druck herrscht, die zu Testbeginn, also im Normalbetrieb herrschte. Hierdurch können insbesondere Ungenauigkeiten, die etwa bei der Bestimmung der oben erläuterten Kompensationsfunktion vorliegen, oder andere Störungen weitgehend ausgeregelt werden.

Zum Testende wird der Sollwert des Hilfs-Kapazitätsreglers auf den aktuell herrschenden Druckwert nachgeführt, so dass die Regeldifferenz zu Null wird, d.h. der Ausgang des Hilfs-Kapazitätsreglers ebenfalls auf Null zurückfährt. Bevorzugt wird hierzu, beispielsweise über ein Relais, der Ausgang des Hilfs-Kapazitätsreglers, der über einen Begrenzer abgeschwächt sein kann, mit umgekehrtem Vorzeichen als Regeldifferenz aufgeschaltet.

### Bezugszeichenliste

- 1: Dampfturbine
- 2: Kompressor
- 3: Leitschaufelregelung mit Messung der Umschaltgeschwindigkeit (opti- onal)
- 4: Pumpgrenzregelung
- 5: Pumpgrenzregelventil
- 6: Positionsmessung
- 7: Durchflussmessvorrichtung
- 8: Leitschaufelstellantrieb
- 9: Durchflussregler
- 10: Sollwertgeber für Durchfluss
- 11: Testsignal
- 12: Grenzwertgeber 1
- 13: Integrator
- 14: Speicher (Flip-Flop)
- 15: Test
- 16: Pumpgrenzüberwachung
- 17: Pumpgrenzregler
- 18: Minimalauswahl
- 19: Positionsregler
- 20: Grenzwertgeber 2
- 21: Funktionsgeber
- 22: Elektrohydraulischer Wandler
- 23: Drossel
- 24: Zulauf
- 25: Ablauf
- 26: Ventilsollwert
- 27: Beobachter
- 28: Stellantrieb

## Patentansprüche

1. Turbokompressor (2) mit einem ersten Prozessstellelement (5), einem zweiten Prozessstellelement (8) und einem Testsystem zum Testen des ersten Prozessstellelements (5), wobei das erste Prozessstellelemertt (5) und das zweite Prozessstellelement (8) zum Steuern der gleichen Prozessgröße vorgesehen sind, **dadurch gekennzeichnet, dass** es sich bei dem ersten Prozessstellelement (5) um ein Pumpgrenzregelventil handelt, und dass es sich bei dem zweiten Prozessstellelement (8) um eine Vorrichtung zum Verstellen der Leitschaufeln, eine Vorrichtung zur Änderung der Drehzahl des Turbokompressors, eine Drosselarmatur, einen Nachleitapparat oder eine Bypassarmatur handelt, und dass für einen Test des ersten Prozessstellelementes (5) das Testsystem beide Prozessstellelemente (5, 8) derart gegensinnig verstellt, dass sich die Einflüsse der Verstellung auf die Prozessgröße im Wesentlichen aufheben.

2. Turbokompressor nach Anspruch 1, **dadurch** gekenntzeichnet, dass ein Regler (17, 19) zur Prozessgrößenregelung vorgesehen ist, um eine Änderung der Prozessgröße durch eine, insbesondere kontinuierliche, Verstellung des zweiten Prozessstellelements (8) über eine Verstellung des ersten Prozesselements zu kompensieren.

3. Turbokompressor nach Anspruch 1 oder 2, **dadurch gekennzeichnet, dass** die gegensinnige Verstellung der beiden Prozessstellelemente derart abgeglichen ist, dass ein Testvorgang ohne wesentliche Beeinträchtigung des dem Turbokompressor nachgelagerten Prozesses von statten geht.

4. Turbokompressor nach einem der vorherigen Ansprüche, **dadurch gekennzeichnet, dass** es sich bei dem Testsystem um ein Teilhubtestsystem handelt.

5. Turbokompressor nach Anspruch 1, **dadurch gekennzeichnet, dass** es sich bei der Prozessgröße um den Durchfluss durch den Turbokompressor, einen Enddruck, einen Ansaugdruck oder eine Leistung handelt.

6. Turbokompressor nach Anspruch 5, **dadurch gekennzeichnet, dass** es sich bei der Änderung des Durchflusses durch die Vorrichtung zum Verstellen der Leitschaufeln um eine kontinuierliche Durchflusserhöhung handelt, die nach Erreichen eines Maximalwertes wieder kontinuierlich auf einen Ausgangswert verringert wird.

7. Turbokompressor nach einem der vorherigen Ansprüche, **dadurch gekennzeichnet, dass** das Testsystem einen Hilfs-Kapazitätsregler aufweist, dessen Sollwert während eines Tests der Prozessgröße zu Beginn des Testes entspricht, dessen Stellgröße zum Testende auf Null zurückgeführt wird, und der auf das erste oder zweite Prozessstellelement einwirkt.

8. Verfahren zum Testen der Funktionalität eines Prozessstellelementes eines Turbokompressor, wobei ein erstes Prozessstellelement (5), ein zweites Prozessstellelement (8) und ein Testsystem zum Testen des ersten Prozessstellelements (5) vorgesehen sind, und das erste Prozessstellelement (5) und das zweite Prozessstellelement (8) zum Steuern der gleichen Prozessgröße vorgesehen sind, **dadurch gekennzeichnet, dass** es sich bei dem ersten Prozessstellelement (5) um ein Pumpgrenzregelventil handelt, und dass es sich bei dem zweiten Prozessstellelement (8) um eine Vorrichtung zum Verstellen der Leitschaufeln, eine Vorrichtung zur Änderung der Drehzahl des Turbokompressors, eine Drosselarmatur, einen Nachleitapparat oder eine Bypassarmatur handelt, und dass für einen Test des ersten Prozessstellelementes (5) das zweite Prozessstellelement (8) so betätigt wird, dass sich die Prozessgröße ändert und das erste Prozessstellelement so betätigt wird, dass die Änderung der Prozessgröße durch das zweite Prozessstellelement im Wesentlichen kompensiert wird.

9. Verfahren nach Anspruch 8, **dadurch gekennzeichnet, dass** der Test des ersten Prozessstellelements (5) **dadurch** erfolgt, dass das zweite Prozessstellelement (8) einer, insbesondere kontinuierlichen, Verstellung ausgesetzt wird, und dass in einem dem ersten Prozessstellelement (5) vorgeschalteten Regler (17, 19) eine Prozessgrößenregelung aktiviert wird, die eine Änderung der Prozessgröße infolge der Verstellung des zweiten Prozesselements (8) kompensiert.

10. Verfahren nach Anspruch 8 oder 9, **dadurch gekennzeichnet, dass** der Funktionstest des ersten Prozessstellelements (5) **dadurch** erfolgt, dass das erste und das zweite Prozessstellelement, insbesondere durch vorzeichengerechte Addition eines Testsignals (11) zu den Ausgangsgrößen vorgeschalteten Regler, gegensinnig einer, Insbesondere kontinuierlichen, Verstellung ausgesetzt werden, wobei durch Zwischenschalten eines nichtlinearen Verstärkungselements (21) die Verstellung der beiden Prozessstellelemente derart erfolgt, dass die Prozessgröße nicht oder nur geringfügig verändert wird.

11. Verfahren nach Anspruch 10, **dadurch gekennzeichnet, dass** sich das Testsignal (11) über der Zeit in Abhängigkeit von der Abweichung der Prozessgröße von einem Sollwert derart ändert, dass es sich bei größeren Abweichungen weniger ändert.

12. Verfahren nach einem der Ansprüche 8 bis 11, **dadurch gekennzeichnet, dass** der Funktionstest des ersten Prozessstellelements **dadurch** erfolgt, dass in einem dem ersten Prozessstellelement (5) vorgeschalteten Regler (17, 19) eine zusätzliche Regeldifferenz aus der Ausgangsgröße des Reglers zu Beginn des Tests und dem, insbesondere stetig, veränderlichen Testsignal gebildet wird, und dass diese Regeldifferenz einer Minimalauswahl aufgeschaltet wird, die als zweiten Eingang die Regeldifferenz der Hauptregelgröße dieses Kreises erhält, und dass das Testsignal für das erste Prozessstellelement (5) derart ist, dass die Prozessgröße nicht oder nur geringfügig verändert wird.

13. Verfahren nach einem der Ansprüche 8 bis 12, **dadurch gekennzeichnet, dass** dem ersten und dem zweiten Prozessstellelement (5, 8) aufgeschalteten Testsignale durch ein nichtlineares Funktionselement (21) derart aufeinander abgestimmt variiert werden, dass die Prozessgröße nicht oder nur geringfügig verändert wird.

14. Verfahren nach einem der Ansprüche 8 bis 13, **dadurch gekennzeichnet dass** die dem ersten und dem zweiten Prozessstellelement aufgeschalteten Testsignale durch ein nichtlineares Kennlinienfeld derart aufeinander abgestimmt verstellt werden, dass in Abhängigkeit von der konstant zu haltenden und/oder einer weiteren Prozessgröße eine Kennlinie zur Abstimmung der Testsignale aufeinander ausgewählt wird, und dass zwischen zwei Kennlinien interpoliert wird, wenn sich die Prozessgröße zwischen zwei Kennlinien befindet.

15. Verfahren nach Anspruch 14, **dadurch gekennzeichnet, dass** die konstant zu haltende oder die weitere Prozessgröße den Enddruck, das Druckverhältnis und/oder die Enthalpiedifferenz der Turbokompressor umfaßt.

16. Verfahren nach einem der Ansprüche 8 bis 15, **dadurch gekennzeichnet, dass** aus einem Vergleich von Sollwert und Istwert für die Stellung eines oder beider Prozessstellelemente ermittelt wird, ob die Prozessstellelemente den Sollwerten korrekt folgen und dass eine Alarmgabe erfolgt, wenn eine unzulässige Abweichung auftritt.

17. Verfahren nach Anspruch 16, **dadurch gekennzeichnet, dass** bei einer einen Grenzwert (12, 20) übersteigenden, insbesondere erheblichen, Abweichung zwischen Sollwert und Istwert der Test abgebrochen wird.

18. Verfahren nach einem der Ansprüche 8 bis 17, **dadurch gekennzeichnet, dass** ein Beobachter (27) zwischengeschaltet wird, der das dynamische Verhalten des ersten und/oder zweiten Prozessstellelements (5, 8) derart simuliert, dass der Ausgang des Beobachters dem erwarteten Stellverhalten des Prozessstellelementes entspricht.

19. Verfahren nach einem der Ansprüche 8 bis 18, **dadurch gekennzeichnet, dass** bei mehreren parallel installierten und zu testenden Prozessstellelementen der Test derart erfolgt, dass alle parallelen Prozessstellelemente gleichzeitig und/oder gleichsinnig angesteuert werden.

20. Verfahren nach einem der Ansprüche 8 bis 19, **dadurch gekennzeichnet, dass** bei mehreren parallel installierten und zu testenden Prozessstellelementen der Test derart erfolgt, dass nur eine Teilmenge, insbesondere nur jeweils eines der Prozessstellelemente, nach der bzw. dem anderen getestet wird.

## Claims

1. A turbocompressor (2) having a first process-adjusting element (5), a second process-adjusting element (8) and a test system for testing the first process-adjusting element (5), wherein the first process-adjusting element (5) and the second process-adjusting element (8) are provided to control the same process variable, **characterised in that** the first process-adjusting element (5) is a surge-limit regulating valve, and **in that** the second process-adjusting element (8) is a device for adjusting the guide vanes, a device for changing the speed of the turbocompressor, a throttle fitting, an outlet-guide apparatus or a bypass fitting, and **in that** to test the first process-adjusting element (5) the test system adjusts both process-adjusting elements (5, 8) in opposite directions in such a way that the influences of the adjustment on the process variable substantially cancel each other out.

2. A turbocompressor according to claim 1, **characterised in that** a regulator (17, 19) is provided for process-variable regulation in order to compensate for a change in the process variable as a result of an adjustment, in particular a continuous adjustment, of the second process-adjusting element (8) by way of an adjustment of the first process element.

3. A turbocompressor according to claim 1 or 2, **characterised in that** the adjustment of the two process-adjusting elements in opposite directions is balanced in such a way that a test procedure proceeds without substantial impairment of the process downstream of the turbocompressor.

4. A turbocompressor according to one of the previous claims, **characterised in that** the test system is a partial-stroke test system.

5. A turbocompressor according to claim 1, **characterised in that** the process variable is the through-flow through the turbocompressor, a final pressure, an intake pressure or an output.

6. A turbocompressor according to claim 5, **characterised in that** the change in the through-flow through the device for adjusting the guide vanes is a continuous increase in through-flow which after reaching a maximum value is continuously reduced again to an initial value.

7. A turbocompressor according to one of the previous claims, **characterised in that** the test system has an auxiliary capacity-regulator, the desired value of which during a test corresponds to the process variable at the start of the test, the regulated variable of which is brought back to zero at the end of the test, and which acts on the first or second process-adjusting element.

8. A method for testing the functionality of a process-adjusting element of a turbocompressor, wherein a first process-adjusting element (5), a second process-adjusting element (8) and a test system for testing the first process-adjusting element (5) are provided, and the first process-adjusting element (5) and the second process-adjusting element (8) are provided to control the same process variable, **characterised in that** the first process-adjusting element (5) is a surge-limit regulating valve, and **in that** the second process-adjusting element (8) is a device for adjusting the guide vanes, a device for changing the speed of the turbocompressor, a throttle fitting, an outlet-guide apparatus or a by-pass fitting, and **in that** to test the first process-adjusting element (5) the second process-adjusting element (8) is actuated in such a way that the process variable is changed, and the first process-adjusting element is actuated in such a way that the change in the process variable as a result of the second process-adjusting element is substantially compensated for.

9. A method according to claim 8, **characterised in that** the test of the first process-adjusting element (5) is effected in such a way that the second process-adjusting element (8) is subjected to an adjustment, in particular a continuous adjustment, and **in that** in a regulator (17, 19) connected upstream of the first process-adjusting element (5) a process-variable regulation is activated that compensates for a change in the process variable in consequence of the adjustment of the second process element (8).

10. A method according to claim 8 or 9, **characterised in that** the function test of the first process-adjusting element (5) is effected **in that** the first and the second process-adjusting element are subjected, in particular through sign-related addition of a test signal (11) to the output variables [of an] upstream regulator, in the opposite direction to an adjustment, in particular a continuous adjustment, wherein as a result of interconnection of a non-linear amplification element (21) the adjustment of the two process-adjusting elements is effected in such a way that the process variable is not changed or is only slightly changed.

11. A method according to claim 10, **characterised in that** the test signal (11) changes over time as a function of the deviation of the process variable from a desired value in such a way that it changes less in the case of greater deviations.

12. A method according to one of claims 8 to 11, **characterised in that** the function test of the first process-adjusting element is effected in such a way that in a regulator (17, 19) connected upstream of the first process-adjusting element (5) an additional regulation difference is established from the output variable of the regulator at the start of the test and the variable test signal, in particular the constantly variable test signal, and **in that** this regulation difference is applied to a minimum selection which as a second input obtains the regulation difference of the main regulating variable of this circuit, and **in that** the test signal for the first process-adjusting element (5) is such that the process variable is not changed or is only slightly changed.

13. A method according to one of claims 8 to 12, **characterised in that** test signals applied to the first and to the second process-adjusting element (5, 8) are varied by a non-linear function element (21) so as to be matched to each other in such a way that the process variable is not changed or is only slightly changed.

14. A method according to one of claims 8 to 13, **characterised in that** the test signals applied to the first and to the second process-adjusting element are adjusted by a non-linear characteristics field so as to be matched to each other in such a way that as a function of the process variable that is to be kept constant and/or a further process variable a characteristic is selected in order to match the test signals to each other, and **in that** there is interpolation between two characteristics when the process variable is located between two characteristics.

15. A method according to claim 14, **characterised in that** the process variable that is to be kept constant or the further process variable includes the final pressure, the pressure ratio and/or the enthalpy difference of the turbocompressor.

16. A method according to one of claims 8 to 15, **characterised in that** from a comparison of the desired value and the actual value for the setting of one or both process-adjusting elements it is ascertained whether the process-adjusting elements follow the desired values correctly, and **in that** an alarm is given when an impermissible deviation occurs.

17. A method according to claim 16, **characterised in that** in the case of a deviation, in particular a considerable deviation, between the desired value and the actual value that exceeds a limiting value (12, 20) the test is aborted.

18. A method according to one of claims 8 to 17, **characterised in that** an observer (27) is interconnected that simulates the dynamic response of the first and/or second process-adjusting element (5, 8) in such a way that the output of the observer corresponds to the expected adjusted response of the process-adjusting element.

19. A method according to one of claims 8 to 18, **characterised in that** in the case of a plurality of process-adjusting elements that are installed in parallel and are to be tested the test is effected in such a way that all parallel process-adjusting elements are activated simultaneously and/or in the same direction.

20. A method according to one of claims 8 to 19, **characterised in that** in the case of a plurality of process-adjusting elements that are installed in parallel and are to be tested the test is effected in such a way that only a partial quantity, in particular only in each case one of the process-adjusting elements, is tested after the other.

## Revendications

1. Turbocompresseur (2) comportant un premier élément de réglage de procédé (5), un second élément de réglage de procédé (8) et un système de test pour tester le premier élément de réglage de procédé (5),
- ce premier élément de réglage de procédé (5) et ce second élément de réglage de procédé (8) commandant les mêmes grandeurs de procédé,
turbocompresseur **caractérisé en ce que**
- le premier élément de réglage de procédé (5) est une soupape de réglage de limite de pompage, et
- le second élément de réglage de procédé (8) est un dispositif réglant les aubes directrices, un dispositif pour modifier la vitesse de rotation du turbocompresseur, une vanne d'étranglement, un appareil de guidage aval ou une vanne de dérivation, et
- pour tester le premier élément de réglage de procédé (5), le système de test actionne les deux éléments de réglage de procédé (5, 8) en sens opposé de façon que les influences du réglage sur les grandeurs de procédé, se compensent pratiquement.

2. Turbocompresseur selon la revendication 1,
**caractérisé en ce qu'**
il comporte un régulateur (17, 19) pour régler une grandeur de procédé, pour modifier la grandeur de procédé par un réglage notamment continu pour compenser le réglage du second élément de réglage de procédé (8) par le réglage du premier élément de procédé.

3. Turbocompresseur selon la revendication 1 ou 2,
**caractérisé en ce que**
le réglage en sens opposé des deux éléments de réglage de procédé est compensé pour que l'opération de test se fasse pratiquement sans influencer le procédé en aval du turbocompresseur.

4. Turbocompresseur selon l'une des revendications précédentes, **caractérisé en ce que**
le système de test est un système de test de course partielle.

5. Turbocompresseur selon la revendication 1,
**caractérisé en ce que**
la grandeur de procédé est le débit à travers le turbocompresseur, la pression de sortie, la pression d'admission ou un rendement.

6. Turbocompresseur selon la revendication 5,
**caractérisé en ce que**
la variation du débit est réalisée par un dispositif de réglage des aubes directrices pour augmenter de façon continue le débit et qui diminue de nouveau en continu vers la valeur initiale après avoir atteint une valeur maximale.

7. Turbocompresseur selon l'une des revendications précédentes, **caractérisé en ce que**
le système de test comporte un régulateur de capacité, auxiliaire, dont la valeur de consigne correspond pendant un test à la grandeur de procédé au début du test et dont la grandeur de réglage est remise à zéro à la fin du test et qui agit sur le premier ou le second élément de réglage de procédé.

8. Procédé de test du fonctionnement d'un élément de réglage de procédé d'un turbocompresseur selon lequel,
on utilise un premier élément de réglage de procédé (5), un second élément de réglage de procédé (8) et un système de test pour tester le premier élément de réglage de procédé (5), et
ce premier élément de réglage de procédé (5) et ce second élément de réglage de procédé (8), commandent les mêmes grandeurs de procédé, procédé **caractérisé en ce que**
- le premier élément de réglage de procédé (5), est une soupape de réglage de limite de pompage, et
- le second élément de réglage de procédé (8), est un dispositif de réglage des aubes directrices, un dispositif pour modifier la vitesse de rotation du turbocompresseur, une vanne d'étranglement, un appareil de guidage aval ou une vanne de dérivation, et
- pour un test du premier élément de réglage de procédé (5), on action ne le second élément de réglage de procédé (8) pour que la grandeur de procédé varie, et on actionne le premier élément de réglage de procédé pour que la variation de la grandeur de procédé soit pratiquement compensée par le second élément de réglage de procédé.

9. Procédé selon la revendication 8,
**caractérisé en ce que**
- le test du premier élément de réglage de procédé (5), se fait **en ce qu'**on effectue sur le second élément de réglage de procédé (8), un réglage notamment continu, et
- dans un régulateur (17, 19) en amont du premier élément de réglage de procédé (5), on active une régulation de grandeur de procédé qui compense une variation de la grandeur de procédé liée au réglage du second élément de procédé (8).

10. Procédé selon la revendication 8 ou 9,
**caractérisé en ce qu'**
- on effectue le test de fonctionnement du premier élément de réglage de procédé (5) **en ce que** l'on expose le premier et le second élément de réglage de procédé, notamment par une addition algébrique d'un signal de test (11) aux grandeurs de sortie du régulateur en amont, en sens opposé à un réglage, notamment continu, et
- par interposition d'un élément d'amplification non linéaire (21), on règle les deux éléments de réglage de procédé pour que la grandeur de procédé ne change plus ou ne change que faiblement.

11. Procédé selon la revendication 10,
**caractérisé en ce que**
le signal de test (11) varie en fonction du temps selon l'écart entre la grandeur de procédé et une valeur de consigne de façon que l'écart varie moins pour des écarts augmentant.

12. Procédé selon l'une des revendications 8 à 11,
**caractérisé en ce qu'**
- on effectue le test de fonctionnement du premier élément de réglage de procédé pour que dans un régulateur (17, 19) en amont du premier élément de réglage de procédé (5), on forme une différence de réglage supplémentaire entre la grandeur de sortie du régulateur au début du test et le signal de test, variable, notamment de manière continue, et
- on applique à cette différence de réglage, un choix d'un minimum qui reçoit comme seconde entrée, la différence de réglage de la grandeur de réglage principale de cette boucle, et
- le signal de test du premier élément de réglage de procédé (5), est tel que la grandeur de procédé ne varie pas ou seulement légèrement.

13. Procédé selon l'une des revendications 8 à 12,
**caractérisé en ce que**
les signaux de test appliqués au premier et au second élément de réglage de procédé (5, 8), sont modifiés de manière accordée l'un sur l'autre par un élément fonctionnel non linéaire (21) pour que la grandeur de procédé ne varie pas ou ne varie que légèrement.

14. Procédé selon l'une des revendications 8 à 13,
**caractérisé en ce que**
les signaux de test appliqués au premier et au second élément de réglage de procédé, sont réglés de manière accordée l'un sur l'autre par un champ de courbes caractéristiques non linéaires pour sélectionner une caractéristique pour accorder l'un à l'autre les signaux de test, en fonction de la grandeur de procédé à maintenir constante et/ou d'une autre grandeur de procédé, et
on interpole entre deux courbes caractéristiques, si la grandeur de procédé se trouve entre deux courbes caractéristiques.

15. Procédé selon la revendication 14,
**caractérisé en ce que**
la seconde grandeur de procédé à maintenir constante ou l'autre grandeur de procédé, sont la pression finale, le rapport de pressions et/ou la différence d'enthalpie du turbocompresseur.

16. Procédé selon l'une des revendications 8 à 15,
**caractérisé en ce qu'**
à partir de la comparaison entre la valeur de consigne et la valeur réelle du réglage de l'un ou des deux éléments de réglage de procédé, on détermine si les éléments de réglage de procédé suivent correctement les valeurs de consigne et une alarme est émise en cas d'écart non autorisé.

17. Procédé selon la revendication 16,
**caractérisé en ce qu'**
en cas d'un écart entre la valeur de consigne et la valeur réelle qui dépasse une valeur limite (12, 20), notamment un écart considérable, on arrête le test.

18. Procédé selon l'une des revendications 8 à 17,
**caractérisé en ce qu'**
on interpose un observateur (27) qui simule le comportement dynamique du premier et/ou du second élément de réglage de procédé (5, 8) pour que la sortie de l'observateur corresponde au comportement de réglage prévisible de l'élément de réglage de procédé.

19. Procédé selon l'une des revendications 8 à 18,
**caractérisé en ce que**
pour plusieurs éléments de réglage de procédé installés en parallèle et qui sont à tester, le test se fait de façon que tous les éléments de réglage de procédé en parallèle, soient commandés simultanément et/ou dans le même sens.

20. Procédé selon l'une des revendications 8 à 19,
**caractérisé en ce que**
pour plusieurs éléments de réglage de procédé installés en parallèle et qui sont à tester, le test se fait de façon que seulement une fraction de l'ensemble, notamment seulement l'un des éléments de réglage de procédé soit testé l'un après le ou les autres.
